# EUROPEAN PATENT APPLICATION

(11) **EP 4 850 974 A1**
(43) Date of publication of application: **09.12.2026**
(21) Application number: 25181072.7
(22) Date of filing: 05.06.2025
(51) Int. Cl.: B60L 58/18, B60L 58/21, H02J 7/00

(54) **METHOD FOR OPERATING A BATTERY SYSTEM OF A VEHICLE, DATA PROCESSING APPARATUS, COMPUTER PROGRAM, COMPUTER-READABLE STORAGE MEDIUM, BATTERY SYSTEM, DRIVETRAIN, AND VEHCLE**

(71) Applicant: Volvo Car Corporation, 405 31 Göteborg (SE)
(72) Inventor: EKSTRÖM, Markus, 40531 Göteborg (SE)
(74) Representative: Kransell & Wennborg KB

(57) **Abstract**

The disclosure relates to a method for operating a battery system (14) comprising a plurality of battery cell units (32). Each battery cell unit (32) comprises one or more battery cells (34) and a cell-level inverter unit (36) which is electrically connected to the one or more battery cells (34), wherein at least some of the cell-level inverter units (36) are electrically series-connected to a pair of battery system terminals. The method comprises obtaining data indicative of a requested output voltage over a requested time span to be provided by the battery system. Moreover, the method comprises requesting one or more of the cell-level inverter units (36) to enable the associated one or more battery cells (34) during a first time portion (T1) and requesting one or more of the cell-level inverter units (36) to enable the associated one or more battery cells (34) during a second time portion (T2). Additionally or alternatively, the method comprises requesting two or more cell-level inverter units (36) to enable the associated one or more battery cells (34) simultaneously. The disclosure further relates to a data processing apparatus (18), a computer program (26), a computer-readable storage medium (24), a battery system (14), a drivetrain (12) for a vehicle (10), and a vehicle (10).

## Description

### TECHNICAL FIELD

The present disclosure relates to a method for operating a battery system of a vehicle.

Furthermore, the present disclosure relates to a data processing apparatus.

In addition, the present disclosure relates to a computer program and to a computer-readable storage medium.

Moreover, the present disclosure relates to a battery system for a vehicle.

Additionally, the present disclosure relates to a drivetrain for a vehicle and a vehicle.

### BACKGROUND

Battery systems for vehicles are known in the prior art. They are typically used in a drivetrain of a battery electric vehicle or a hybrid electric vehicle to supply electric power to an electric traction machine for the propulsion of said vehicle. Furthermore, the electric power supplied by the battery system can also be used for other applications such as for powering an infotainment system, onboard lights and air conditioning of the vehicle. In sum, there are several electric loads in the vehicle which require electric power to fulfill their function.

In order to maintain a reliable supply of electric current to the different loads, the power supply of the battery system must be controlled in an efficient manner. On the one side, the battery cells of the battery system have to be protected from being deteriorated by applying high loads. On the other side, high loads have to be applied to the battery system in certain situations. In particular, such peak loads arising from the operation of the electric traction machine have to be applied to the battery system without damaging the battery cells.

The need for protecting the battery cells and the demand for applying high peak loads are at least partially conflicting objectives.

### SUMMARY

The problem is at least partially solved or alleviated by the subject matter of the independent claims of the present disclosure, wherein further examples are incorporated in the dependent claims.

According to a first aspect, there is provided a method for operating a battery system comprising a plurality of battery cell units. Each battery cell unit comprises one or more battery cells and a cell-level inverter unit which is electrically connected to the one or more battery cells. At least some of the cell-level inverter units are electrically series-connected to a pair of battery system terminals. The method comprises:
- obtaining data indicative of a requested output voltage over a requested time span to be provided by the battery system,
- requesting one or more of the cell-level inverter units to enable the associated one or more battery cells during a first time portion of the requested time span and requesting one or more of the cell-level inverter units to enable the associated one or more battery cells during a second time portion of the requested time span, wherein the one or more cell-level inverter units enabled during the first time portion are different from the one or more cell-level inverter units enabled during the second time portion, such that the requested output voltage or a portion thereof is provided via different cell-level inverter units during the first time portion and during the second time portion, and/or
- requesting two or more cell-level inverter units to enable the associated one or more battery cells simultaneously, such that the requested output voltage is provided by the two or more cell-level inverters conjointly, wherein the two or more cell-level inverters enable a partial load of the associated one or more battery cells only.

In order to protect the battery cells and to be able to sustain high loads simultaneously the above method is proposed. This method covers three alternatives. In a first alternative, one or more of the cell-level inverter units are requested to enable the associated one or more battery cells during a first time portion of the requested time span and one or more of the cell-level inverter units are requested to enable the associated one or more battery cells during a second time portion of the requested time span. The one or more cell-level inverter units enabled during the first time portion are different from the one or more cell-level inverter units enabled during the second time portion, such that the requested output voltage or a portion thereof is provided via different cell-level inverter units during the first time portion and during the second time portion. In a second alternative, two or more cell-level inverter units are requested to enable the associated one or more battery cells simultaneously, such that the requested output voltage is provided by the two or more cell-level inverters conjointly. The two or more cell-level inverters enable a partial load of the associated one or more battery cells only. A third alternative is a combination of the first alternative and the second alternative.

The idea of the present disclosure is to share the load of the requested output voltage on different battery cell units or different groups of battery cell units. In other words, the requested output voltage is distributed on several battery cell units. For example, the requested output voltage may be distributed by switching between different battery cell units such that each battery cell unit only has to supply the load for a specific amount of time, i.e., the first time portion or the second time portion. In other words, the battery cell units share the load along the time axis. Thus, the battery cells are protected because they are discharged only for a short amount of time, i.e. high current need to be sustained for a short time only. This prevents the battery cells from being completely depleted and/or drained which may lead to a decreased performance. It may also be possible that the load is shared between different battery cell units such that each battery cell unit only enables a portion of the requested output voltage. Thus, only a partial load of the associated one or more battery cells is enabled by the cell level inverter unit which prevents the battery cells from being deteriorated and/or completely depleted. However, because the requested output voltage is enabled and/or shared between different battery cell units, the requested output voltage can be enabled by the battery system without difficulties. In other words, two or more battery cell units are operated at the same time and conjointly provide the requested power. The load sharing mechanism as disclosed by this method provides also the advantage that high current peaks can be provided by the battery system. Thus, the above method provides an efficient energy distribution mechanism which allows on the one hand to protect battery cells and on the other hand to sustain high current peaks.

In the context of the present method, at least some of the cell-level inverter units, i.e. a first group of cell-level inverter units, are electrically series-connected to a pair of battery system terminals, i.e. a first pair of battery system terminals. This first pair of battery system terminals may be configured to be electrically connected to one phase of an electric machine, i.e. a first phase of the electric machine. This means that this first pair of battery system terminals is configured to supply one phase of an electric machine, i.e. the first phase, with the requested power. It is also possible, that at least some other cell-level inverter units, i.e. a second group of cell-level inverter units, are electrically series-connected to another pair of battery system terminals, i.e. a second pair of battery system terminals. This second pair of battery system terminals may be configured to be electrically connected to another phase of an electric machine, i.e. a second phase of the electric machine. This means that this second pair of battery system terminals is configured to supply one phase of an electric machine, i.e. the second phase, with the requested power. It is additionally possible, that at least some other cell-level inverter units, i.e. a third group of cell-level inverter units, are electrically series-connected to another pair of battery system terminals, i.e. a third pair of battery system terminals. This third pair of battery system terminals may be configured to be electrically connected to another phase of an electric machine, i.e. a third phase of the electric machine. This means that this third pair of battery system terminals is configured to supply one phase of an electric machine, i.e. the third phase, with the requested power. Altogether, a three phase electric machine may be supplied with power by such a battery system. It is understood that the number of phases of the electric machine and the number of groups of cell-level inverter units is not necessarily limited to three.

The data indicative of a requested output voltage over a requested time span to be provided by the battery system, may be indicative of a sinusoidal voltage over time. Such an output voltage is well usable for powering an AC electric machine.

The term "time portions" as used herein may be expressed as an angle of the sinusoidal voltage, i.e. the sine wave function, as well. In particular, the first time portion and the second time portion may be following directly after each other without overlapping each other. In principle there may be more time portions present after the first and second time portion. In general, the requested time span may be divided into the first time portion and the second time portion and additional N time portions, wherein N is a natural number. The time portions may be the same or different for each other. Preferably, the time portions are equal.

Within the respective time, the requested output voltage or portion thereof may be provided by different cell level inverter units and their associated battery cells, wherein within the respective time portion there may be more than one cell level inverter unit providing the requested output voltage. This means that the respective cell level inverter unit does not enable the requested output voltage from the one or more battery cells from the associated battery cells into time portions following directly after each other. In doing so, it is ensured that the respective battery cells can rest for at least one time portion before they are again enabled to provide the requested output voltage or a portion thereof.

The term "cell level inverter unit" as used herein means an inverter unit suitable for battery system of the vehicle which is configured to convert DC current enabled by the one or more battery cells to AC current. In this context "cell level" means that the inverter unit is electrically connected to one or more battery cells only and not to all battery cells series connected to the pair of battery system terminals.

The term "partial load" of the associated one or more battery cells used herein means that the output voltage provided by the one or more battery cells is smaller than the maximum voltage that could be provided by the one or more battery cells. In other words, the battery cells are not discharged at the respective performance limit. This allows to protect the battery cells in an efficient manner. However, due to the simultaneously provision of the requested output voltage by the two or more cell level inverter units conjointly, high current peaks can be sustained by the battery system.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, requesting one or more of the cell-level inverter units to enable the associated one or more battery cells during the first time portion and requesting one or more of the cell-level inverter units to enable the associated one or more battery cells during the second time portion is performed in accordance with a predefined pattern.

Using a predefined pattern provides the advantage that enabling the associated one or more battery cells during the first time portion and the second time portion can be carried out in a time efficient manner. In particular, it is ensured that different cell level inverter units are utilized without any overlap between the time portions.

The term "pattern" means the provision of the predefined time schedule comprising a plurality of time portions of the requested time span which are arranged subsequent to each other. Thus, there is no overlap between the time portions. In each time portion one or more cell level inverter units are scheduled to enable the associated one or more battery cells such that the requested output voltage or portion thereof is provided in the respective time portion. Furthermore, the same cell level inverter unit is not scheduled in two time portions directly following each other. Preferably, at least one or more time portions are scheduled in between the time portions in which the same specific cell level inverter unit enables the associated one or more battery cells.

For example, there may be different patterns pre-stored, each pattern may correspond to a load specific situation or a specific requested output voltage. Thus, using a pattern allows to react in different situations in a versatile manner.

According to an example, enabling the associated one or more battery cells is performed on a time scale such that a discharge current originating from the enabled one or more battery cells originates from a capacitive layer of the battery cell and/or from an inductive element of the battery cell.

It has been found that enabling the associated one or more battery cells on the timescale such that the discharge current originates from a capacitive layer of the enabled battery cell allows to the battery cell to sustain, i.e. provide, high current peaks. The same applies to the inductive behavior of the battery cell which is provided by one or more inductive elements of the battery cell. On the other hand, enabling the associated one or more battery cells on the timescale such that the discharge current originates from the cell chemistry of the enabled battery cells does not allow to sustain such high current peaks. In other words, switching between the cell level inverter units and therefore switching between different associated one or more battery cells in such a timescale allows to utilize the capacitive layer and/or the inductive element of the battery cells to sustain higher loads. In principle, the time scale is very small, preferably in the microsecond regime. Switching between different battery cells in the timescale of microseconds allows the battery cells to function as capacitors and/or inductors allowing to enable a high voltage and/or current for a very short time. Switching between different cell units in a fast manner allows to continuously, i.e. for a longer time, provide a very high current and/or voltage, e.g. over the requested time span to provide the requested output voltage.

The term "capacitive layer of the battery cells" is formed by the dielectric double layer formed between the active material layer of the battery cell and the electrolyte. The inductive element or inductive elements of a battery cell are formed by all conductive elements of a battery cell that exhibit an inductive behavior.

According to an example, requesting one or more of the cell-level inverter units to enable the associated one or more battery cells comprises requesting the associated one or more battery cells to provide a pulse width modulation signal.

Using the pulse width modulation allows to modulate the requested output voltage, e.g. a sinusoidal voltage, or portion thereof an efficient manner. In principle pulse width modulation allows transforming DC current from the one or more battery cells to AC current in an effective manner and provides the signal of AC current with high-quality which can be supplied to one or more loads without difficulties.

According to an example, the first time portion and/or the second time portion of the requested time span is 0.1 ms to 10.000 ms, preferably 1 ms to 500 ms, more preferably 1 ms to 100 ms. According to a further example, the first time portion and/or the second time portion of the requested time span is 0.1 to 1.500 ms or 0.1 to 1.000 ms.

The above first and second time portions in the millisecond range allow to switch between different battery cells in a very fast manner, thereby utilizing mainly the capacitive layer and/or the inductive element of the battery cells. In other words, the above time portion ensures that the battery cell behaves more like a capacitor and/or an inductor which allows to sustain high loads. At the same time, because of the very fast switching between the one or more battery cells, battery cells are protected as the time portion in which the one or more battery cells are enabled is very short.

Using the capacitive layer and/or the inductive element and using the above-mentioned time spans, the one or more battery cells may sustain comparatively high currents. This means that the one or more battery cells may be discharged at 5C to 20C. In this context, 5C and 20C refer to a so-called relative discharge, wherein the letter C stands for the capacity of the one or more battery cells and the number indicates how many times this capacity would be discharged if the one or more battery cells were operated for one hour. This means that a discharge of 5C refers to a discharge that would be five times the battery capacity in one hour. The discharge of 20C means that the battery cell would discharge 20 times its capacity in one hour. Depending on the specific design of the battery cell, this means that currents of 300A to 1300 A may be realized. In another example, the one or more battery cells may be discharged at 7C, 15C or 18C. The associated currents may be 400 A to 1200 A, wherein this again depends on the specific design of the battery cells. As has been mentioned above, these currents are sustained for a very short time.

According to an example, the partial load is a predefined partial load which is the same for all battery cell units enabled simultaneously.

The partial load which is the same for all battery cell units, allows to distribute the requested output voltage homogeneously on the battery system. Thus, the battery cells are protected from high loads, but the battery system is still capable of sustaining high loads, i.e. high current peaks.

According to an example, the one or more cell-level inverter units are requested to provide alternative current.

In other words, the one or more cell level inverter units directly convert DC power from the battery cells into AC power which is provided to the load connected to the battery system. In other words, the load shared by the one or more cell level inverter units is an AC load.

According to an example, prior to requesting one or more of the cell-level inverter units to enable the associated one or more battery cells, the method may comprise subdividing the battery system into two or more groups of battery cell units. Each group of battery cell units being requested to provide a predefined voltage level such that the requested output voltage is provided by the two or more groups of battery cell units conjointly.

Subdividing the group of battery cells into two or more groups of battery cell units provides the advantage that the requested output voltage can be distributed evenly on different groups of battery cells, wherein each group of battery cell units provides a predefined voltage level. The term voltage level means that each battery cell group provides a portion of the requested output voltage. Therefore, the load can be shared in a simple manner between different battery cell groups such that the impact on the single battery cell is even more reduced. Furthermore, by grouping the battery cell units, larger loads can be handled in a more efficient manner because the load which can be carried by each respective group of battery cell unit is larger than the load which can be handled by a single battery cell unit. Furthermore, grouping the battery cell units allows a more efficient communication as the number of battery cell units controlled is reduced.

According to an example, the predefined voltage level is a portion of the requested output voltage.

Dividing the requested output voltage into different voltage levels provides the advantage that the different parts of the battery system can provide the respective portion of the requested output voltage in a more efficient manner. Thus, the requested output voltage can be handled in a more efficient manner.

According to a second aspect, there is provided a data processing apparatus comprising means for carrying out the method of any one of the preceding claims.

Using such a data processing apparatus, the conflict between the need for protecting the battery cells and the demand for applying high peak loads is mitigated or solved. Moreover, such a data processing apparatus for carrying out the above method is of advantage because there are no specialized equipment and/or electronic components necessary to carry out the above method. Thus, the above method can be carried out by any computer or control unit, e.g. automotive control unit. This renders the above method versatile and cost efficient to implement into various systems.

According to a third aspect, there is provided a computer program comprising instructions which, when the computer program is executed by a computer, cause the computer to carry out the method of the first aspect. Using such a computer program, the conflict between the need for protecting the battery cells and the demand for applying high peak loads is mitigated or solved.

According to a fourth aspect, there is provided a computer-readable storage medium comprising instructions which, when executed by a computer, cause the computer to carry out the method of the first aspect. Using such a data processing computer-readable storage medium, the conflict between the need for protecting the battery cells and the demand for applying high peak loads is mitigated or solved.

According to a fifth aspect, there is provided a battery system comprising a plurality of battery cell units. Each battery cell unit comprises one or more battery cells and a cell-level inverter unit which is electrically connected to the one or more battery cells. At least some of the cell-level inverter units are electrically series-connected to a pair of battery system terminals, and a data processing apparatus according to the second aspect. The data processing apparatus is communicatively coupled to each of the battery cell units.

The above-described battery system can handle high peak loads in an effective manner without risking deterioration of its components. In particular, high peak loads can be effectively distributed according to the above method on the battery cell units in a simple manner. Moreover, the respective battery cells are protected from being deteriorated by high loads. Altogether, the conflict between the need for protecting the battery cells and the demand for applying high peak loads is mitigated or solved.

According to a sixth aspect, there is provided a drivetrain for an electric vehicle. The drivetrain comprises a battery system according to the fifth aspect and an electric traction machine being electrically coupled to the battery system via at least the pair of battery system terminals.

Such a drivetrain is in particular suitable for handling high peak loads in the drivetrain of an electric vehicle, wherein the high peak loads originate from the electric traction machine of the drivetrain for the propulsion of the vehicle. Typically, high current loads of the vehicle are very demanding for the battery system as they request very high output voltages and/or currents of the battery system. These high output voltages and/or currents may deteriorate or at least shorten the lifetime of the battery cells as the battery cells have to provide the requested output voltage and/or current for a period of time with their maximum electrical performance. However, providing maximum electrical performance over the predefined requested time span shortens the lifetime of the battery cells. The drivetrain prevents this behavior of the battery cells by sharing the load on one or more cell level inverter units which are associated with one or more battery cells. Either the load is shared by switching between different cell level inverter units or the requested output voltage is provided by two or more cell level inverter units conjointly.

According to a seventh aspect, there is provided a vehicle comprising a drivetrain of the sixth aspect.

In principle, the same advantages and effects that have been explained in connection with the drivetrain also apply to the vehicle as described above.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic view of a vehicle according to the present disclosure, the vehicle comprising a drivetrain, a battery system, a data processing apparatus, a computer program, and a computer-readable storage medium according to the present disclosure;
- Figure 2: shows a detailed view of a battery system of the vehicle of Fig. 1;
- Figure 3: shows a diagram illustrating a requested output voltage in sinewave form;
- Figure 4: shows a diagram illustrating the provision of the requested output voltage of Fig. 3 according to a method for operating the battery system of the prior art;
- Figure 5: shows schematic flow diagram with the steps according to a method for operating a battery system according to the present disclosure;
- Figure 6: shows a diagram illustrating the provision of the requested output voltage of Fig. 3 according to a first embodiment of the present disclosure; and
- Figure 7: shows a diagram illustrating the provision of the requested output voltage of Fig. 3 according to a second embodiment of the present disclosure.

### DETAILED DESCRIPTION

The Figures are merely schematic representations and serve only to illustrate examples of the disclosure. Identical or equivalent elements are in principle provided with the same reference signs.

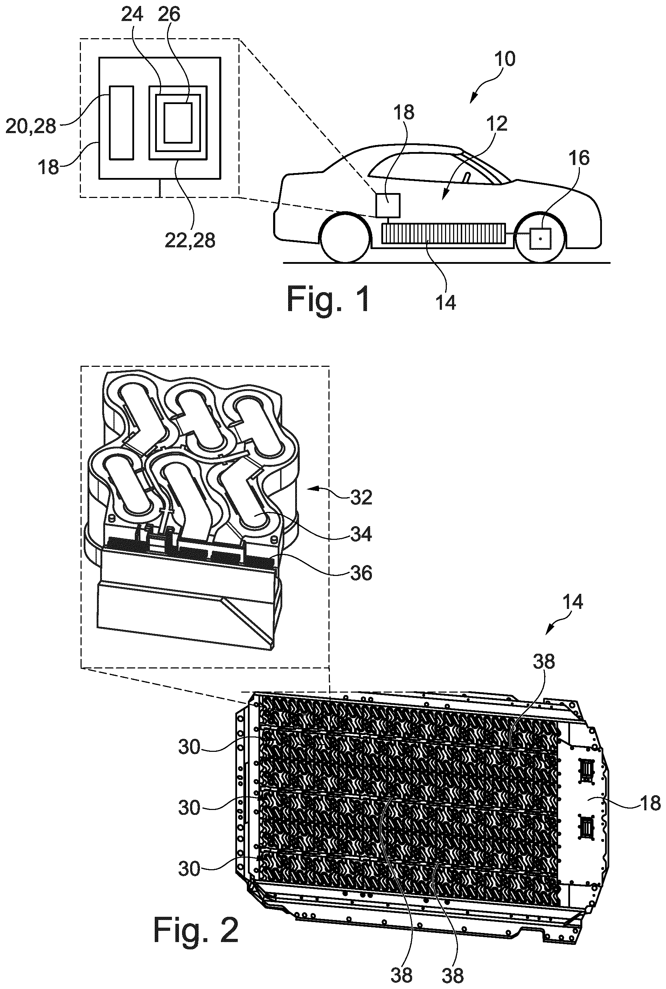

Figure 1 shows a vehicle 10 which comprises a drive train 12.

The drive train 12 comprises a battery system 14 which is electrically coupled to an electric traction machine 16. In particular, the battery system 14 is configured to supply AC current to the electric traction machine 16. In more detail, the electric traction machine 16 is a three-phase electric traction machine for the propulsion of the vehicle 10.

The vehicle 10 further comprises a data processing apparatus 18 which is communicatively coupled to the battery system 14.

The data processing apparatus 18 has a data processing unit 20 and a data storage unit 22.

The data storage unit 22 comprises a computer-readable storage medium 24.

On the computer-readable storage medium 24, there is provided a computer program 26.

The computer-readable storage medium 24 and the computer program 26 comprise instructions which, when executed by the data processing unit 20 or, more generally speaking, a computer, cause the data processing unit 20 or the computer to carry out a method for clearing a traffic participant incident.

Consequently, the data processing unit 20 and the data storage unit 22 form means 28 for carrying out a method for operating a battery system 14.

The battery system 14 is shown in a more detailed view in Fig. 2.

The battery system 14 comprises one or more battery strings 30. The battery strings 30 may be arranged next to or adjacent to each other.

Each battery string 30 is configured to provide one phase of an alternating current to supply the electric traction machine 16. In other words, the electric traction machine 16 is electrically coupled with each of the battery strings 30 of the battery system 14.

In the present example, the battery system 14 comprises three battery strings 30, each battery string 30 powering one phase of a three-phase alternating current to supply the electric traction machine 16. Consequently, the battery system 14 provides a three-phase alternating current to supply the electric traction machine 16.

As can be seen further in Fig. 2, each of the battery strings 30 comprises a plurality of battery cell units 32. The battery cell units 32 of one string 30 are electrically coupled in series.

To be more specific, each battery cell unit 32 comprises one or more battery cells 34 which are electrically coupled in series.

Furthermore, each battery cell unit 32 comprises a cell level inverter unit 36 which may be also be denoted herein as inverter unit.

The cell level inverter unit 36 is configured to convert direct current from the one or more battery cells 34 in alternating current to supply the electric traction machine 16.

For example, the cell-level inverter unit 36 may comprise a PCB or other electronic components (not shown) to convert direct current into alternating current.

The cell level inverter units 36 are electrically coupled in series with each other via a busbar 38, thereby forming one of the strings 30.

In other words, each battery string 30 comprises one busbar 38 which electrically couples in series a plurality of cell level inverter units 36 of the battery cell units 32.

As it can be further seen in Fig. 2, each battery string 30 is electrically coupled to the data processing apparatus 18 arranged at the front side of the battery system 14.

Furthermore, the data processing apparatus 18 is communicatively coupled with each of the cell level inverter units 36, for example, via a wireless connection such as Bluetooth or Wi-Fi.

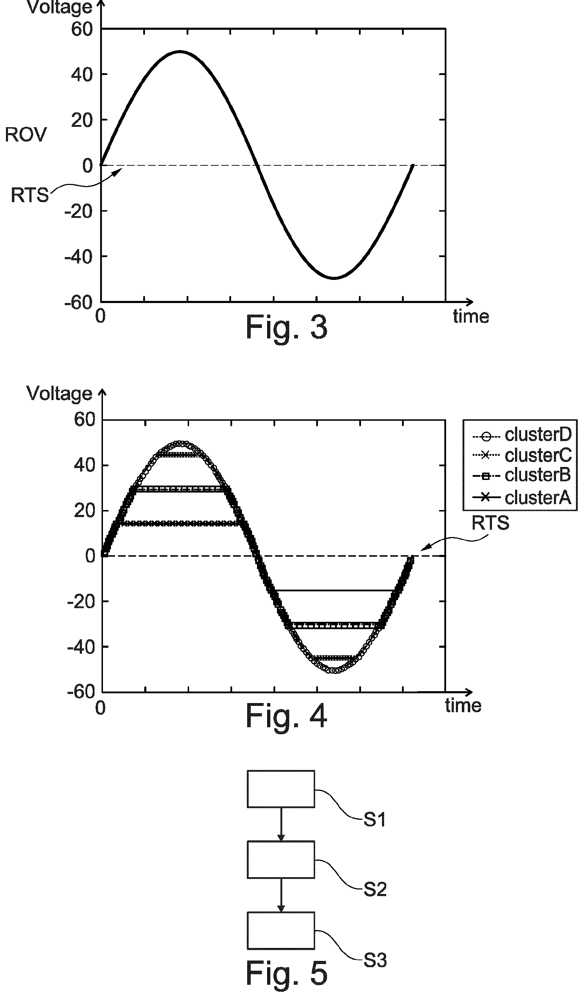

In the following the method for operating a battery system 14 according to the prior art is described with reference to Figs. 3 and 4.

As can be seen in Figure 3, the requested output voltage ROV is typically received by the data processing apparatus 18. The requested output voltage ROV may be required by an electric component of the vehicle 10, for example, the requested output voltage ROV may be required by the electric machine 16 of the vehicle 10. Further, the requested output voltage is requested over the requested time span RTS to be provided by the battery system 14.

Furthermore, the requested output voltage ROV typically refers to alternating current. Thus, the requested output voltage ROV to be provided by the battery system 14 corresponding to one example phase of a three phase alternating current. Therefore, the requested output voltage has a sine waveform is shown in Figure 3.

Thus, Fig. 3 displays the requested output voltage ROV over the requested time span RTS. This kind of voltage has to be provided by the battery system 14.

It is understood that also for the remaining phases a similar output voltage is requested. Moreover, it is understood that the illustrated sine wave, i.e. the output voltage, continues over time.

Fig. 4 shows a method for operating the battery system 14 to provide the requested output voltage ROV over the requested time span RTS according to the prior art.

As is shown in Fig. 4, the battery system 14 may use four battery cell units 32 which are configured to provide output voltage. Each battery cell unit 32 has a maximum load which corresponds to the maximum load of the associated one or more battery cells 34.

In the example shown in Fig. 4, each battery cell unit 32 may have a maximum load of 15 V. As the maximum peak voltage requested is 50 V, there is a need for four battery cell units 32 to provide the voltage according to their maximum load in order to reach the requested output voltage ROV, in particular, the amplitude of the requested output voltage ROV.

This is typically achieved by connecting the four battery cell units 32 in series, wherein the maximum voltage of each battery cell unit 32 is sequentially activated and ramped up to provide the requested output voltage ROV. In other words, the four battery cell units 32 are ramped up in order to reach the amplitude peak of the requested output voltage ROV and are subsequently ramped down. The negative portion of the sine wave is achieved by switching the cell level inverter unit accordingly, i.e. also for the negative portion the four battery cells are sequentially activated and deactivated, i.e. ramped up and ramped down essentially in the same manner as for the positive portion of the sine wave.

Since the requested voltage is 50V, the last battery cell unit 32 is only activated such that it provides a maximum of 5 V, i.e. this battery cell unit 32 is under partial load only.

The above method of providing the requested output voltage has the drawback that the battery cell units 32 have to provide the maximum load voltage in order to provide the requested output voltage ROV over a large portion of the requested time span RTS. However, this may decrease the performance of the associated one or more battery cells over time.

Fig. 5 illustrates steps of the method for operating the battery system 14 according to the present disclosure.

In the first step S1, data indicative of a requested output voltage ROV of a requested time span to be provided by the battery system 14 is obtained. This step may be carried out by the data processing apparatus 18. The requested output voltage ROV may have the same form as indicated in Figure 3.

In a next step S2, the battery system 14 is subdivided into two or more groups of battery cell units 32. Each group of battery cell units 32 being requested to provide a predefined voltage level Vₙ such that the requested output voltage is provided by the two or more groups of battery cell units 32 conjointly. This step may be carried out by the data processing apparatus 18.

In other words, the data processing apparatus 18 may divide the battery system 14 into one or more groups of battery cell units 32 and request each of the groups of battery cell units 32 to provide the predefined voltage level Vₙ.

The predefined voltage level Vₙ may be a portion of the requested output voltage ROV.

The data processing apparatus 18 may receive the requested output voltage ROV from the machine control unit which is not shown in the figures.

According to the requested output voltage ROV the data processing apparatus 18 may set the predefined voltage levels Vₙ which is assigned to the groups of battery cell units 32.

In the next step S3, the method comprises requesting one or more of the cell level inverter units 36 to enable the associated one or more battery cells 34 during a first-time portion T1 of the requested time span RTS and requesting one or more of the cell level inverter units 36 to enable an associated one or more battery cells 34 during a second time T2 portion of the requested time span RTS. The one or more cell level inverter units 36 enabled during the first time portion T1 are different from the one or more cell level inverter units 36 enabled during the second time portion T2 such that the requested output voltage ROV or a portion thereof is provided via different cell level inverter units 36 during the first time portion T1 and during the second time portion T2. This is denoted as the first embodiment of the present disclosure.

Requesting one or more of the cell level inverter units 36 to enable the associated one or more battery cells 34 during the first time portion T1 and requesting one or more of cell level inverter units 36 to enable the associated one or more battery cells 34 during the second time portion T2 is performed in accordance with the predefined pattern.

Preferably, enabling the associated one or more battery cells 34 is performed on timescales such that the discharge current originating from the enabled one or more battery cells 34 originates from a capacitive layer of the battery cells 34 and/or from an inductive element of the battery cell 34.

In addition, requesting one or more of the cell level inverter units 36 to enable the associated one or more battery cells 34 comprises requesting the associated one or more battery cells to provide a pulse width modulation signal.

The first time portion T1 in order second time portion of the requested time span is 0.1 ms to 10.000 ms, preferably 1 ms to 500 ms, more preferably 1 ms to 100 ms. According to a further example, the first time portion and/or the second time portion of the requested time span is 0.1 to 1.500 ms or 0.1 to 1.000 ms.

Alternatively or in addition to the above, the step S3 may comprise requesting two or more cell level inverter units to enable an associated one or more battery cells 34 simultaneously such that the requested output voltage ROV is provided by the two or more cell level inverter units 36 conjointly. The two or more cell level inverter units 36 enable a partial load of the associated one or more battery cells 34 only. This is denoted as the second embodiment of the present disclosure.

Preferably, the partial load is the predefined partial pressures the same for battery cell units 36 enabled simultaneously.

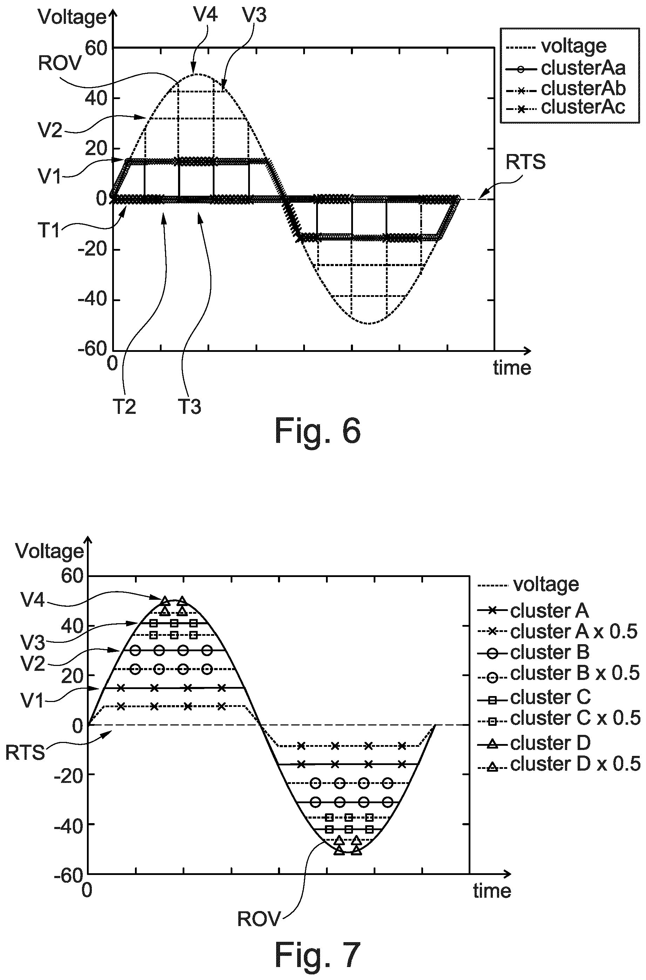

Figure 6 illustrates how the requested output voltage is provided according to the first embodiment.

Similar to the example of Figure 4, , each of the battery cell units 32 used in Fig. 6 is requested to provide a voltage of 15 V. The requested output voltage ROV to be achieved is 50 V.

The data processing apparatus 18 subdivides the battery system 14 into four groups of battery cell units 32 each group of battery cell units 32 comprises three battery cell units 32. Each group of battery cell units 32 being requested to provide a predefined voltage level Vₙ. In this case, each voltage level Vₙ may be 15 volts. Thus, four voltage levels Vₙ of 15 V are required.

Within a group of battery cell units 32, the following method is carried out. The data processing apparatus 18 requests one of the cell level inverter units 32 to enable the associated one or more battery cells 34 during the first time portion T1 of the requested time span RTS. Subsequently after the first time portion T1, the data processing apparatus 18 requests the second level inverter unit 36 to enable the associated one or more battery cell units 36 during a second time portion T2 of the requested time span RTS. Following the second time portion T2, the data processing apparatus 18 requests the third cell level inverter unit 36 to enable the associated one or more battery cells during the third time portion T3 of the requested time span RTS. The one or more cell level inverter units 36 enabled during the first time portion T1 are different from the one or more cell level inverter units 36 enabled during the second time portion T2 and from the third time portion T3. In other words, the requested output voltage ROV or portions thereof is provided via different cell level inverter units 36 during the first, the second end of the third time portion T1-T3. The time portions T1-T3 are repeated according to a predefined pattern. As it can be seen in Fig. 6, the time portions T1-T3 for the first group of battery cell units 32 are the same.

As it can be further seen in Fig. 6, the four groups of battery cell units 32 are activated in parallel in order to provide the requested output voltage of V50, each group of battery cell units 32 providing the same output voltage level of 15 V.

In particular, each group of battery cell units 32 provide a pulse-width modulated sine wave signal of the requested output voltage ROV. The difference between the groups of battery cell units 32 is the length of the time portions T1-T3 which become shorter for the second, the third and the fourth group of battery cell units. In other words, each of the groups of battery cell units 32 may comprise a specific pattern which is different from the other groups of battery cell units 32. In total, 12 battery cell units 32 are required to provide the requested output voltage ROV over the requested time span RTS. In contrast to the method according to the prior art, the method for operating the battery system according to Fig. 6 provides the advantage that the requested output voltage ROV is evenly distributed on 12 battery cell units 32. Although each of the battery cell units provides the maximum output voltage of 12. The battery cell units 32 are active much shorter compared to the battery cell units 32 of Fig. 5 because the requested output voltage ROV or portion thereof is provided via different cell units 32 over time.

A second embodiment of the present disclosure is illustrated in Fig. 7.

Turning to Fig. 7, there are in total eight battery cell units 32 to achieve the requested output voltage ROV of 50 V. In particular, the data processing apparatus 18 requests the eight cell level inverter units 36 to enable the associated one or more battery cells 34 simultaneously such that the requested output voltage ROV is provided by the eight cell level inverter units 36 conjointly. To be specific, there are in total four pairs of battery cell units 32, wherein each pair of battery cell units 32 achieves the respective output voltage level V1-V4 of 15V. The eight or more cell level inverter units 34 enable a partial load of the associated one or more battery cells 34 only. As it can be seen in the example shown in Fig. 7, the partial load is 50% of the associated one or more battery cells 34. This means that the partial load of each battery cell unit 32 of the four pairs of battery cell units 32 is 7.5 V.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: drive train
- 14: battery system
- 16: electric traction machine
- 18: data processing apparatus
- 20: data processing unit
- 22: data storage unit
- 24: computer-readable storage medium
- 26: computer program
- 28: means for carrying out the method
- 30: battery strings
- 32: battery cell units
- 34: battery cells
- 36: cell-level inverter unit
- 38: busbar

- S1: first step
- S2: second step
- S3: third step
- Vₙ: Voltage level
- ROV: requested output voltage
- RTS: requested time span
- T1: First time portion
- T2: Second time portion

## Claims

1. A method for operating a battery system (14) comprising a plurality of battery cell units (32), each battery cell unit (32) comprising one or more battery cells (34) and a cell-level inverter unit (36) which is electrically connected to the one or more battery cells (34), wherein at least some of the cell-level inverter units (36) are electrically series-connected to a pair of battery system terminals, the method comprising:
- obtaining data indicative of a requested output voltage over a requested time span to be provided by the battery system (14),
- requesting one or more of the cell-level inverter units (36) to enable the associated one or more battery cells (34) during a first time portion (T1) of the requested time span (RTS) and requesting one or more of the cell-level inverter units (36) to enable the associated one or more battery cells (34) during a second time portion (T2) of the requested time span (RTS), wherein the one or more cell-level inverter units (36) enabled during the first time portion (T1) are different from the one or more cell-level inverter units (36) enabled during the second time portion (T2), such that the requested output voltage (ROV) or a portion thereof is provided via different cell-level inverter units (36) during the first time portion (T1) and during the second time portion (T2), and/or
- requesting two or more cell-level inverter units (36) to enable the associated one or more battery cells (34) simultaneously, such that the requested output voltage (ROV) is provided by the two or more cell-level inverters (36) conjointly, wherein the two or more cell-level inverters (36) enable a partial load of the associated one or more battery cells (34) only.

2. The method according to claim 1, wherein requesting one or more of the cell-level inverter units (36) to enable the associated one or more battery cells (34) during the first time portion (T1) and requesting one or more of the cell-level inverter units (36) to enable the associated one or more battery cells (34) during the second time portion (T2) is performed in accordance with a predefined pattern.

3. The method according to claim 1 or 2, wherein enabling the associated one or more battery cells (34) is performed on a time scale such that a discharge current originating from the enabled one or more battery cells (34) originates from a capacitive layer of the battery cells (34) and/or from an inductive element of the battery cell (34).

4. The method of any one of the preceding claims, wherein requesting one or more of the cell-level inverter units (36) to enable the associated one or more battery cells (34) comprises requesting the associated one or more battery cells (34) to provide a pulse width modulation signal.

5. The method according to any one of the preceding claims, wherein the first time portion (T1) and/or the second time portion (T2) of the requested time span is 0.1 ms to 10.000 ms, preferably 1 ms to 500 ms, more preferably 1 ms to 100 ms.

6. The method according to any one of the preceding claims, wherein the partial load is a predefined partial load which is the same for all battery cell units (36) enabled simultaneously.

7. The method according to any one of the preceding claims, wherein the one or more cell-level inverter units (36) are requested to provide alternating current.

8. The method according to any one of the preceding claims, wherein prior to requesting one or more of the cell-level inverter units (36) to enable the associated one or more battery cells (34), the method comprises subdividing the battery system (14) into two or more groups of battery cell units (32), each group of battery cell units (32) being requested to provide a predefined voltage level (Vₙ) such that the requested output voltage (ROV) is provided by the two or groups of battery cell units (32) conjointly.

9. The method of claim 8, wherein the predefined voltage level (Vₙ) is a portion of the requested output voltage (ROV).

10. A data processing apparatus (18) comprising means for carrying out the method of any one of the preceding claims.

11. A computer program (26) comprising instructions which, when the computer program (26) is executed by a computer, cause the computer to carry out the method of claims 1 to 9.

12. A computer-readable storage medium (24) comprising instructions which, when executed by a computer, cause the computer to carry out the method of claims 1 to 9.

13. A battery system (14) comprising a plurality of battery cell units (32), each battery cell unit (32) comprising one or more battery cells (34) and a cell cell-level inverter unit (36) which is electrically connected to the one or more battery cells (34), wherein at least some of the cell-level inverter units (36) are electrically series-connected to a pair of battery system terminals, and a data processing apparatus (18) according to claim 10, wherein the data processing apparatus (18) is communicatively coupled to each of the battery cell units (32).

14. A drivetrain (12) for an electric vehicle (10), comprising a battery system (14) according to claim 13 and an electric traction machine (16) being electrically coupled to the battery system (14) via at least the pair of battery system terminals.

15. A vehicle (10) comprising a drivetrain (12) of claim 14.
